# EUROPÄISCHE PATENTSCHRIFT

(11) **EP 1 889 778 B1**
(45) Veröffentlichungstag und Bekanntmachung des Hinweises auf die Patenterteilung: **12.11.2008**
(21) Anmeldenummer: 07013334.3
(22) Anmeldetag: 07.07.2007
(51) Int. Cl.: B62K 23/02

(54) **Armatur zur handbedienten Betätigung einer Kupplung oder einer Bremse**
Fitting for manual actuation of a clutch or brake
Armature destinée à l'actionnement commandé à la main d'un embrayage ou d'un frein

(30) Priorität: 16.08.2006 DE 102006038172
(43) Veröffentlichungstag der Anmeldung: 20.02.2008
(73) Patentinhaber: Gustav Magenwirth GmbH & Co. KG, 72574 Bad Urach (DE)
(72) Erfinder: Schmauder, Werner, 72584 Hülben (DE)
(74) Vertreter: Maucher, Wolfgang

(56) Entgegenhaltungen:
- EP-A- 0 875 443
- EP-A- 1 473 221
- EP-A- 1 527 989
- EP-A- 1 650 121
- EP-A2- 0 853 035
- US-A- 5 832 782

## Beschreibung

Die Erfindung bezieht sich auf eine Armatur zur handbedienten Betätigung einer Kupplung oder einer Bremse insbesondere an einem Zweirad, mit einem Handhebel, der in einem Armaturengehäuse schwenkbar um eine Drehachse gelagert ist, (siehe zum Beispiel EP-A-1 650 121).
Bei solchen Armaturen besteht das Problem, dass bei einer Drehlagerung mit der möglichen, geringen Lagerlänge in axialer Richtung und einer angestrebten Leichtgängigkeit bei Betätigung, ein geringes Lagerspiel vorhanden sein muss, durch das jedoch ein seitliches Hebelspiel unvermeidbar ist. Durch die vergleichsweise große Länge des Handhebels wirkt sich dies am freien Ende des Hebels besonders aus.
Fahrzeugbewegungen und Vibrationen bei motorgetriebenen Zweirädern führen zu Schwingungsanregungen an dem Handhebel, so dass dieser, insbesondere bei Resonanzerscheinungen, in unbetätigter beziehungsweise nicht von Hand beaufschlagter Lage, quer zu seiner Schwenkebene mitschwingen kann.
Die Schwenklagerung wird durch diese Schwingungen zusätzlich belastet, was mit der Zeit zu einer Erhöhung des Lagerspiels und damit zu einer Verringerung der Lebensdauer führt. Außerdem wird dadurch der Wertigkeitseindruck des Bauteils nachteilig beeinflusst.

Aufgabe der vorliegenden Erfindung ist es, eine Armatur der eingangs erwähnten Art zu schaffen, die auch bei großen auf sie einwirkenden Vibrationsbelastungen eine hohen Lebensdauer aufweist und bei der nur ein allenfalls geringes Seitenspiel des Handhebel vorhanden ist.

Zur Lösung dieser Aufgabe wird vorgeschlagen, dass beabstandet zur Drehachse des Handhebels an einem der bei Betätigung des Handhebels relativ zueinander bewegten Teile wenigstens ein Distanzelement zur Lagerspielreduzierung quer zur Schwenkebene des Handhebels vorgesehen ist.
Damit wird der Handhebel beabstandet zu seiner Lagerung quer abgestützt und das Seitenspiel des Handhebels eingeengt, so dass Schwingungsbelastungen des Lagers zumindest reduziert sind. Die Lebensdauer der Hebellagerung wird dadurch verlängert.

Die vorzugsweise zwei gegenüberliegend angeordneten Distanzelemente können an dem Handhebel vorgesehen sein, bevorzugt sind sie jedoch innenseitig im Armaturengehäuse vorgesehen. Die Distanzelemente treten dadurch nicht störend in Erscheinung. Andererseits ist bei einer Anordnung der Distanzelemente an dem Handhebel eine über den gesamten Hebelweg in Eingriff befindliche Führung einfacher realisierbar.

Nach einer bevorzugten Ausführungsform sind die Distanzelemente im Armaturengehäuse durch etwa in Bewegungsrichtung der relativ zueinander bewegten Teile orientierte, stegartige Führungsrippen gebildet. Diese Führungsrippen ergeben eine kleinflächige, etwa linienförmige Auflage an dem Handhebel, so dass die Leichtgängigkeit des Handhebels nicht nachteilig beeinflusst ist.

Zweckmäßigerweise nimmt der lichte Abstand der Führungsrippen zueinander in Verstellrichtung des relativ dazu bewegten Teils bei Betätigung des Handhebels zu. Die Seitenbewegungseinschränkung des Handhebels nimmt dadurch in Richtung Ruhestellung zu, wobei im letzten Bewegungsabschnitt praktisch eine Seitenspielfreiheit erreicht werden kann, ohne dass die Leichtgängigkeit der Hebelbewegung im übrigen Betätigungsbereich beeinträchtigt ist.

Das Armaturengehäuse kann ein Druckgussteil sein, wobei die Führungsrippen bildenden Distanzelemente zweckmäßigerweise mit ihrer Längserstreckung in Entformungsrichtung des Druckgussteils verlaufen.
Dabei ist vorgesehen, dass der lichte Abstand der Führungsrippen in Entformungsrichtung zunimmt.
Der Entformungswinkel der Führungsrippen kann dabei etwa 0,5° betragen und ist somit relativ zu dem Entformungswinkel der gegenüberliegenden Innenwände des Armaturengehäuses mit etwa 1° bis 2° geringer, um eine gute Seitenführung des Hebels über einen großen Hebelschwenkabschnitt zu erreichen.

Zusätzliche Ausgestaltungen der Erfindung sind in den weiteren Unteransprüchen aufgeführt. Nachstehend ist die Erfindung anhand der Zeichnungen in einem Ausführungsbeispiel näher erläutert. Es zeigt:
- Fig. 1: eine Aufsicht einer Armatur zur handbedienten Betätigung einer Kupplung oder einer Bremse, mit einem in Ruhestellung befindlichen Handhebel und einem Armaturengehäuse,
- Fig. 2: eine Rückseitenansicht der in Fig.1 gezeigten Armatur,
- Fig. 3: eine Schnittdarstellung gemäß der Schnittlinie C-C in Fig. 1,
- Fig. 4: eine Schnittdarstellung gemäß der Schnittlinie B-B in Fig.1,
- Fig. 5: eine Schnittdarstellung gemäß der Schnittlinie A-A in Fig. 1 ,
- Fig. 6: eine vergrößerte Detailansicht des in Fig.5 umgrenzten Bereichs VI,
- Fig. 7: eine Aufsicht einer Armatur etwa entsprechend Fig.1 hier jedoch mit angezogenem Handhebel,
- Fig. 8: eine Schnittdarstellung gemäß der Schnittlinie B'-B' in Fig.7 und
- Fig. 9: eine Schnittdarstellung gemäß der Schnittlinie C'-C' in Fig.7.

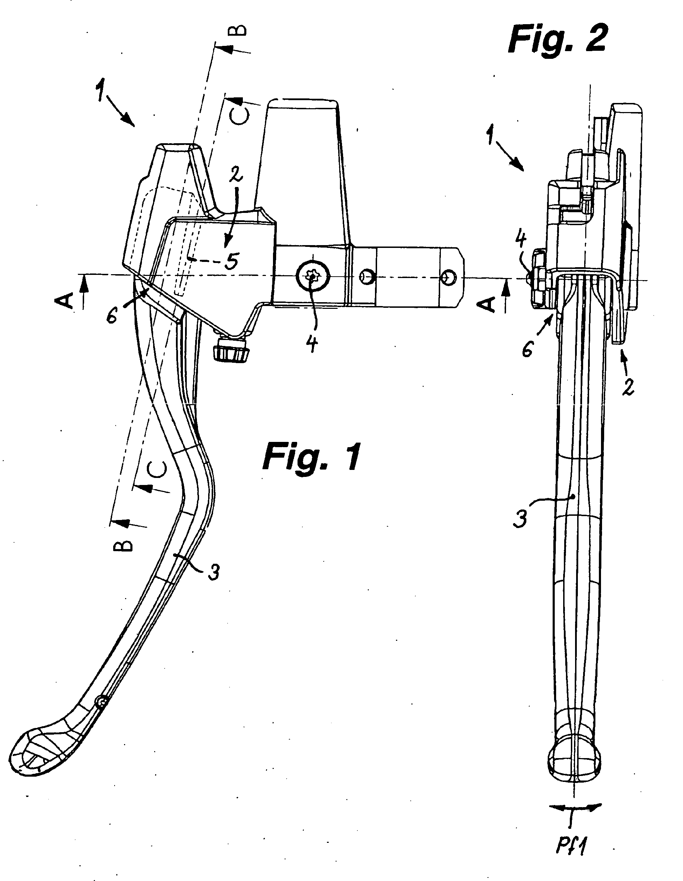

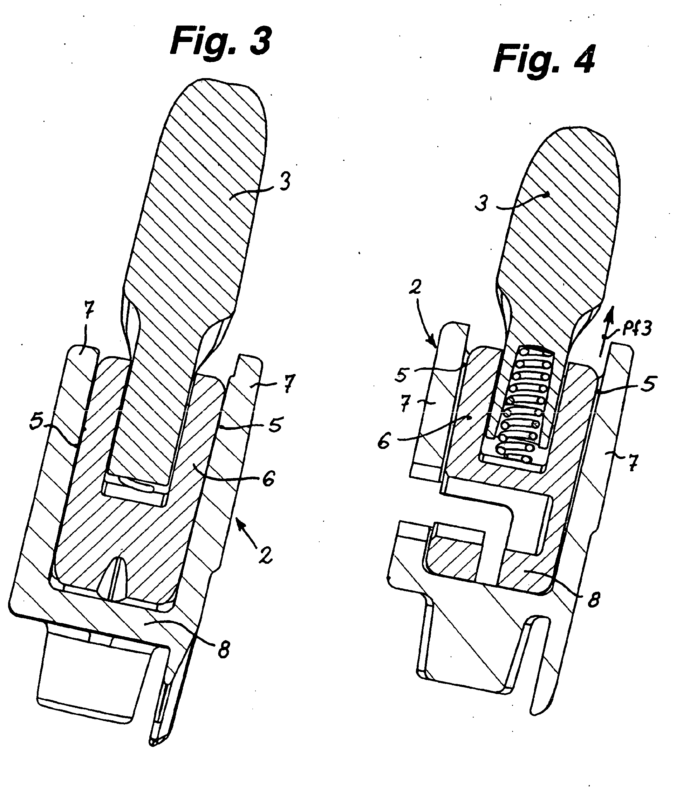

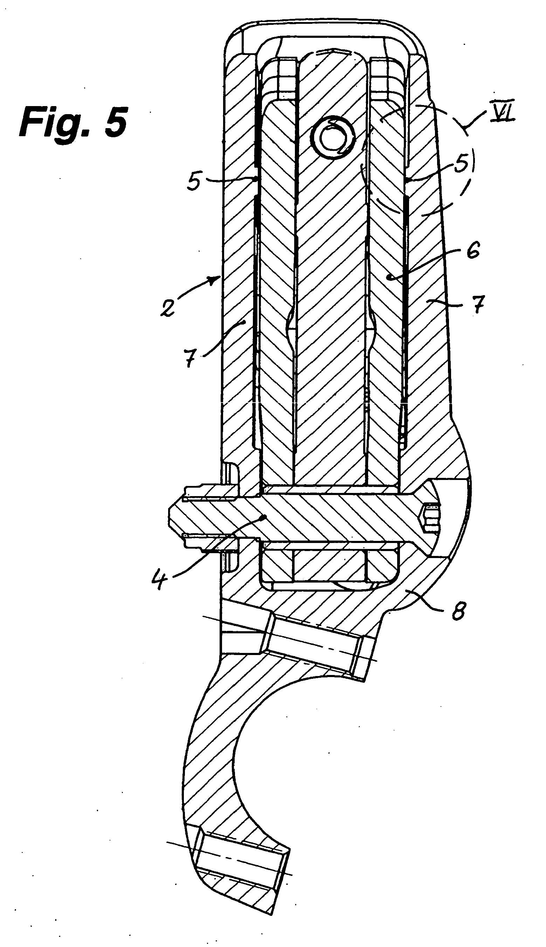

Ein in den Figuren gezeigte Armatur 1 dient zur handbedienten Betätigung einer Kupplung oder einer Bremse insbesondere an einem Zweirad. Sie weist ein Armaturengehäuse 2 auf, in dem ein Handhebel 3 schwenkbar um eine Drehachse 4 gelagert ist.
Um eine Seitenspiel-Einengung des Handhebel 3 gemäß dem Doppelpfeil Pf1 in Fig.2 zu erreichen, sind beabstandet zur Drehachse 4 des Handhebels 3 im Armaturengehäuse 2 stegartige Führungsrippen 5 vorgesehen, zwischen denen der Handhebel 3 zusätzlich geführt ist. Diese stegartigen Führungsrippen 5 sind in den Schnittdarstellungen gemäß Fig.3 bis 6 gut erkennbar.

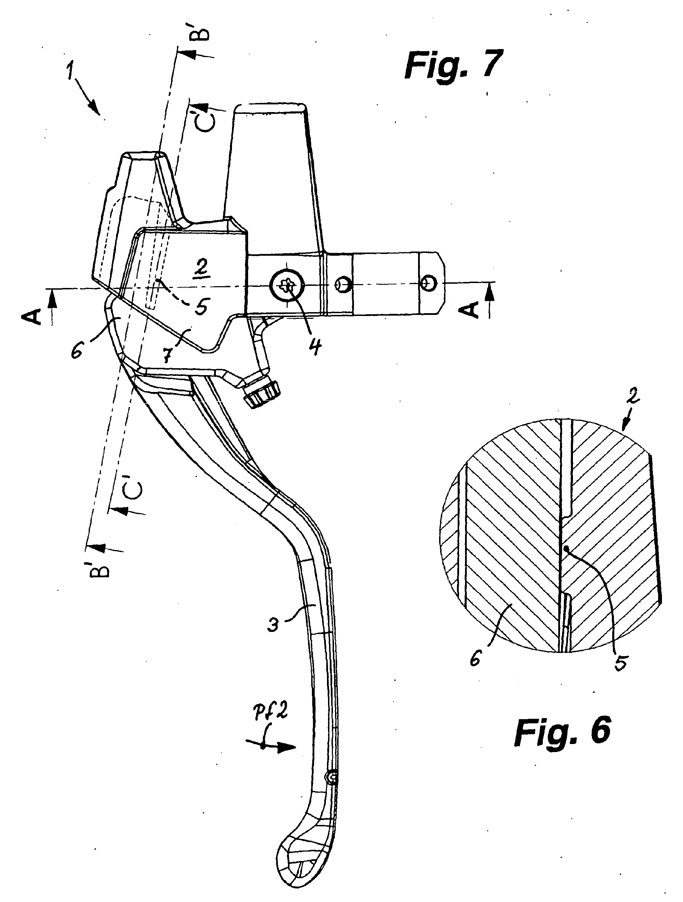

Im Ausführungsbeispiel weist der Handhebel 3 einen zu dessen Längserstreckung abgewinkelten Teil 6 auf, der an seinem freien Endbereich an der Drehachse 4 gelagert ist und an dem die beiden gegenüberliegend im Armaturengehäuse 2 angeordneten Führungsrippen 5 angreifen. Der abgewinkelte Teil 6 des Handhebels 3 ist gut in Fig. 7 erkennbar, wo der Handhebel in Betätigungslage, also gemäß dem Pfeil Pf 2 verschwenkt gezeigt ist.

Das Armaturengehäuse 2 ist im wesentlichen U-förmig vorzugsweise als Gussteil, insbesondere Druckgussteil ausgebildet (vgl. Fig. 2 bis 5). Für eine problemlose Entformung des Druckgussteiles sind dessen Seitenschenkel innenseitig mit einer Entformungsschräge versehen, so dass der lichte Abstand in der Nähe der freien Schenkel des Armaturengehäuses 2 größer ist als im Bereich des U-Verbindungsschenkels 8. Der Entformungswinkel kann dabei 1° bis 2° betragen.
In Fig.4 ist gut erkennbar, dass die Führungsrippen 5 zwar auch eine Entformungsschräge aufweisen, so dass der lichte Abstand der Führungsrippen 5 in Entformungsrichtung gemäß dem Pfeil Pf3 in Fig.4 zunimmt, jedoch weniger als der lichte Abstand der Innenwände der Seitenschenkel 7. Der Entformungswinkel der Führungsrippen 5 kann beispielsweise etwa 0,5° betragen.
Die Führungsrippen 5 im Armaturengehäuse 2 verlaufen etwa in Bewegungsrichtung des abgewinkelten Teils 6 des Handhebels 3. Somit ist praktisch über den gesamten Bewegungsbereich des Handhebels 3 die Seitenführung durch die Führungsrippen 5 wirksam.

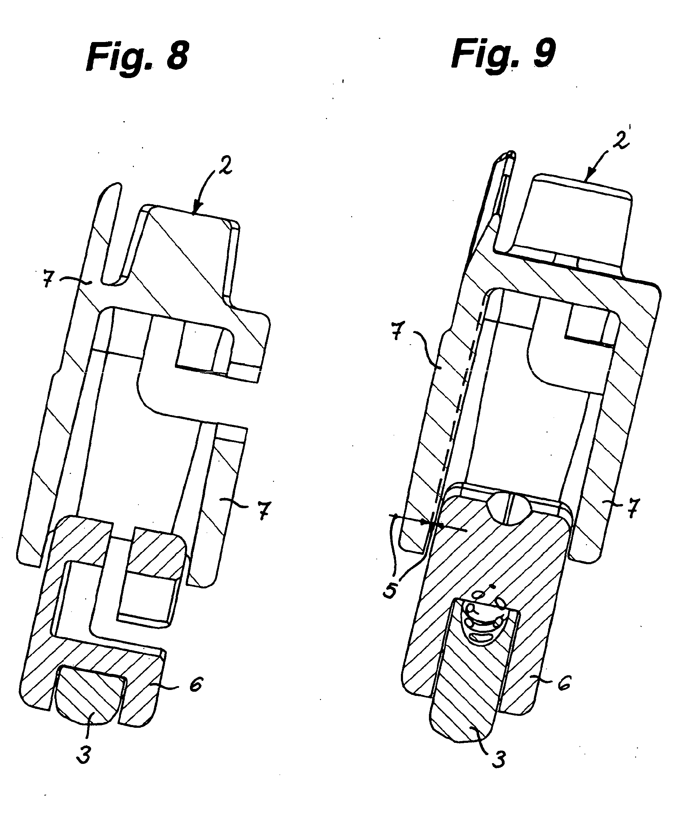

Die Fig.8 bis 9 zeigen noch Schnittdarstellungen entsprechend den Schnittlinien B'- B' beziehungsweise C'- C'. Dabei sind in Fig.9 die strichliniert dargestellten Führungsrippen 5 erkennbar.

## Patentansprüche

1. Armatur zur handbedienten Betätigung einer Kupplung oder einer Bremse insbesondere an einem Zweirad, mit einem Handhebel (3), der in einem Armaturengehäuse (2) schwenkbar um eine Drehachse (4) gelagert ist, **dadurch gekennzeichnet, dass** beabstandet zur Drehachse (4) des Handhebels (3) an einem der bei Betätigung des Handhebels relativ zueinander bewegten Teile wenigstens ein Distanzelement (5) zur Lagerspielreduzierung quer zur Schwenkebene des Handhebels (3) vorgesehen ist.

2. Armatur nach Anspruch 1, **dadurch gekennzeichnet, dass** das oder die Distanzelemente (5) innenseitig im Armaturengehäuse (2) vorgesehen sind.

3. Armatur nach Anspruch 1 oder 2, **dadurch gekennzeichnet, dass** das oder die Distanzelemente im Armaturengehäuse (2) durch etwa in Bewegungsrichtung der relativ zueinander bewegten Teile (3/6,2) orientierte, stegartige Führungsrippen (5) gebildet sind.

4. Armatur nach einem der Ansprüche 1 bis 3, **dadurch gekennzeichnet, dass** der Handhebel (3) einen zu dessen Längserstreckung abgewinkelten Teil (6) aufweist, der an seinem freien Endbereich an der Drehachse (4) gelagert ist und dass die Führungsrippen (5) an dem abgewinkelten Teil (6) des Handhebels (3) angreifen.

5. Armatur nach einem der Ansprüche 1 bis 4, **dadurch gekennzeichnet, dass** der lichte Abstand der Führungsrippen (5) zueinander in Verstellrichtung des relativ dazu bewegten Teils (3/6) bei Betätigung des Handhebels (3) zunimmt.

6. Armatur nach einem der Ansprüche 1 bis 5, **dadurch gekennzeichnet, dass** das Armaturengehäuse (2) ein Gussteil ist und dass die Führungsrippen (5) bildenden Distanzelemente mit ihrer Längserstreckung in Entformungsrichtung des Gussteils verlaufen.

7. Armatur nach Anspruch 6, **dadurch gekennzeichnet, dass** der lichte Abstand der Führungsrippen (5) in Entformungsrichtung zunimmt.

## Claims

1. Fitting for manually operated actuation of a clutch or a brake, particularly on a bicycle, having a hand-operated lever (3) which is mounted in a housing (2) so as to be pivotable about a rotation spindle (4), **characterised in that** at a spacing from the rotation spindle (4) of the hand-operated lever (3) on one of the parts that move relative to one another on actuation of the hand-operated lever there is provided at least one spacer element (5) for reducing the bearing play transversely with respect to the pivoting plane of the hand-operated lever (3).

2. Fitting according to claim 1, **characterised in that** the spacer element or elements (5) are provided on the inside of the housing (2).

3. Fitting according to claim 1 or 2, **characterised in that** the spacer element or elements are formed in the housing (2) by web-like guide ribs (5) oriented substantially in the direction of movement of the parts (3/6, 2) that move relative to one another.

4. Fitting according to one of claims 1 to 3, **characterised in that** the hand-operated lever (3) has a part (6) that is bent relative to the longitudinal extent thereof, said bent part (6) being mounted on the rotation spindle (4) at its free end region and **in that** the guide ribs (5) act on the bent part (6) of the hand-operated lever (3).

5. Fitting according to one of claims 1 to 4, **characterised in that** the clear distance of the guide ribs (5) from one another increases in the direction of movement of the part (3/6) moving relative thereto on actuation of the hand-operated lever (3).

6. Fitting according to one of claims 1 to 5, **characterised in that** the housing (2) is a casting and **in that** the longitudinal direction of the spacer elements forming the guide ribs (5) extends in the direction of removal of the casting from the mould.

7. Fitting according to claim 6, **characterised in that** the clear spacing of the guide ribs (5) increases in the direction of removal of the casting from the mould.

## Revendications

1. Accessoire pour l'actionnement manuel d'un embrayage ou d'un frein, en particulier sur un véhicule à deux roues, avec un levier à main (3) qui est monté à pivotement autour d'un axe de rotation (4) dans un boîtier d'accessoire (2), **caractérisé en ce qu'**au moins un élément d'écartement (5) est prévu à distance de l'axe de rotation (4) du levier à main (3) sur l'une des pièces déplacées l'une par rapport à l'autre lors de l'actionnement du levier à main, afin de réduire le jeu de palier transversalement au plan de pivotement du levier à main (3).

2. Accessoire selon la revendication 1, **caractérisé en ce que** le ou les éléments d'écartement (5) sont prévus sur le côté intérieur dans le boîtier d'accessoire (2).

3. Accessoire selon la revendication 1 ou 2, **caractérisé en ce que** le ou les éléments d'écartement sont formés dans le boîtier d'accessoire (2) par des nervures de guidage (5) du genre barrettes, orientées approximativement dans la direction de déplacement des pièces (3/6, 2) déplacées l'une par rapport à l'autre.

4. Accessoire selon l'une des revendications 1 à 3, **caractérisé en ce que** le levier à main (3) présente une partie (6) coudée par rapport à son étendue longitudinale qui est montée par sa région terminale libre sur l'axe de rotation (4), et **en ce que** les nervures de guidage (5) agissent sur la partie coudée (6) du levier à main (3).

5. Accessoire selon l'une des revendications 1 à 4, **caractérisé en ce que** l'écartement entre les nervures de guidage (5) dans la direction de déplacement de la pièce (3/6) déplacée par rapport à elles augmente lors de l'actionnement du levier à main (3).

6. Accessoire selon l'une des revendications 1 à 5, **caractérisé en ce que** le boîtier d'accessoire (2) est une pièce moulée, et **en ce que** les éléments d'écartement formant des nervures de guidage (5) s'étendent par leur étendue longitudinale dans la direction de démoulage de la pièce moulée.

7. Accessoire selon la revendication 6, **caractérisé en ce que** l'écartement entre les nervures de guidage (5) augmente dans la direction de démoulage.
